# FASCICULE DE BREVET EUROPEEN

(11) **EP 1 060 818 B1**
(45) Date de publication et mention de la délivrance du brevet: **23.02.2005**
(21) Numéro de dépôt: 99420134.1
(22) Date de dépôt: 15.06.1999
(51) Int. Cl.: B22F 3/11, C25D 1/08, C22C 1/08, C22C 1/04

(54) **Structures tridimensionnelles à haute porosité en alliages contenant du chrome**
Hochporöse dreidimensionale Strukturen aus Chrom enthaltende Legierungen
Highly porous three-dimensional chromium containing alloy structures

(43) Date de publication de la demande: 20.12.2000
(73) Titulaire: S.C.P.S. Société de Conseil et de Prospective Scientifique S.A., 93110 Rosny-sous-Bois (FR)
(72) Inventeur: Bugnet, Bernard, 94420 le Plessis-Trevise (FR); Doniat, Denis, 75116 Paris (FR); Rouget, Robert, 75016 Paris (FR)
(74) Mandataire: Moinas, Michel

(56) Documents cités:
- FR-A- 2 258 466
- FR-A- 2 558 485
- FR-A- 2 737 507
- GB-A- 603 762
- GB-A- 2 006 271
- CHEMICAL ABSTRACTS, vol. 109, no. 26, 26 décembre 1988 (1988-12-26) Columbus, Ohio, US; abstract no. 239204, BAUMGARTNER, CHARLES E.: "Passivation of porous nickel plaque against corrosion in nickel dinitrate solutions" XP002079081 & J. ELECTROCHEM. SOC. (1988), 135(10), 2541-2 CODEN: JESOAN;ISSN: 0013-4651,
- PATENT ABSTRACTS OF JAPAN vol. 097, no. 001, 31 janvier 1997 (1997-01-31) & JP 08 225866 A (SUMITOMO ELECTRIC IND LTD), 3 septembre 1996 (1996-09-03)

## Description

La présente invention concerne le domaine des supports de catalyseurs et celui des media filtrants.

Elle est plus particulièrement relative à l'utilisation de structures métalliques à haute porosité réalisées en alliages réfractaires pour applications à la catalyse et à la filtration.

On connaît l'usage répandu des mousses de nickel (Ni) comme supports et collecteurs d'électrodes positives d'accumulateurs alcalins nickel-cadmium et nickel-hydrures métalliques. Ces produits sont des structures alvéolaires réticulées, à porosité totalement ou très largement ouverte.

Les mousses de nickel constituent l'une des familles des structures métalliques "tridimensionnelles" (ou "3D") à haute porosité, qui comporte également les produits de type feutres (enchevêtrement de fils non tissés), ainsi que les tissés. Ces derniers sont le plus souvent constitués de deux faces tissées reliées par pontage, par des fils sensiblement transversaux aux faces.

Les structures métalliques "3D" sont le plus souvent produites selon un procédé qui respecte l'enchaînement des étapes opératoires suivantes : activation conductrice d'un substrat de base en matériau organique ; métallisation par électrolyse ; brûlage des matières organiques (substrat d'origine et éventuellement produits d'activation conductrice) ; désoxydation et recuit de la structure métallique obtenue.

L'emploi de ces structures pour des applications telles que la filtration ou la catalyse, s'avère souvent particulièrement intéressant en raison de leur forte porosité et de niveaux de perte de charge qui peuvent être choisis en fonction des besoins.

Une des limitations à ces applications tient aux contraintes thermiques ou chimiques particulières qui peuvent être rencontrées, et qui font que des structures réalisées en nickel peuvent s'oxyder ou se corroder, en ambiance oxydante, à haute température.

Pour pallier ces inconvénients, et obtenir des résultats satisfaisants, il est nécessaire de recourir à des alliages dits réfractaires, dont l'un des composants est le chrome (Cr).

Les procédés de fabrication des structures métalliques "3D" font, comme on l'a dit, généralement appel à une étape de dépôt galvanique qui rend difficile la réalisation d'alliages complexes.

Pour répondre en partie à ce problème, diverses voies ont été proposées (voir par exemple GB-A-2006271), appliquées à la famille des mousses :
- la réalisation de mousses d'alliages, par frittage de particules,
- la cémentation de chrome, sur des mousses de nickel.

La première technique est délicate à mettre en oeuvre, et difficile à exploiter industriellement en raison des contraintes de la manipulation des poudres, et de la difficulté du frittage de particules d'alliages réfractaires.

La seconde technique fait appel à des supports disponibles commercialement (mousses de nickel) et à une technique connue (la cémentation). Ainsi, des brevets DUNLOP mentionnent la réalisation d'une mousse d'alliage nickel-chrome (Ni-Cr) basée sur ce principe.

La cémentation du chrome (chromisation) s'applique traditionnellement à des pièces de formes simples, de petite à moyenne dimension. Lorsqu'elle est mise en oeuvre avec des supports de formes très complexes, comme les mousses métalliques, plusieurs difficultés apparaissent :
- le cément, constitué de poudre de chrome et d'un gel, doit pénétrer uniformément à l'intérieur de la structure poreuse. L'opération est difficile à réaliser de manière homogène avec des mousses à pores moyens (entre 45 et 80 PPI), impossible avec des structures à pores très fins (mousses de 80 à 100 PPI), à forte tortuosité (feutres), ou épais et denses (tissés) ;
- en fin de cycle de traitement, le cément doit être éliminé : les grains de chrome ont tendance à s'agglomérer, et des opérations mécaniques sont alors nécessaires pour débarrasser les mousses du cément.

Par ailleurs, la pénétration du chrome ainsi déposé au sein de la couche de nickel, est superficielle, de par le principe de fabrication. L'alliage formé par diffusion de composants apportés sous les formes indiquées, est donc hétérogène, et ceci limite la résistance thermique de la structure du fait du risque d'oxydation de la sous couche de métal faiblement allié en chrome.

Les auteurs de la présente invention ont montré que pour pallier ces divers problèmes, il convenait de mettre en oeuvre des techniques spécifiques de dépôt électrolytique, pour déposer le chrome au sein de la structure poreuse, sur la totalité de sa surface développée, et de réaliser l'alliage par diffusion thermique entre les couches réalisées avec ses divers constituants.

Afin, en particulier, de réaliser des alliages réfractaires, susceptibles de résister à des températures élevées, il est nécessaire de constituer des alliages ternaires tels que Ni-Cr-Al, Fe-Cr-Al, ou quaternaires, Ni-Fe-Cr-Al.

Ces alliages ne pouvaient être que difficilement réalisés par des codépôts. Il a donc fallu recourir à des apports successifs de chacun des constituants des futurs alliages.

On sait que le dépôt de nickel est réalisé industriellement par voie électrolytique, comme par exemple dans JP-A-08-225866, sur des structures de types mousse ou feutre rendues conductrices (activées).

Il a par ailleurs été développé et breveté, une technique d'activation des supports polymériques poreux (mousses, feutres ou tissés) qui permet, dans d'excellentes conditions, de leur conférer un bon niveau de conductivité, et d'appliquer par dépôt électrolytique des métaux variés tels que nickel, fer, cuivre ou alliages binaires ou ternaires de ces métaux.

Il s'agit de l'activation par dépôt chimique de polymères conducteurs (brevet français n° 95 09547, publication n° 2 737 507).

L'apport de chrome peut également être réalisé industriellement par dépôt électrolytique. Toutefois, cette opération est habituellement pratiquée sur des pièces métalliques de forme relativement simple et aux surfaces lisses. L'homme de l'art sait en effet que les bains de chrome utilisés pour le chromage dur ou pour le chromage décoratif ont un pouvoir de pénétration réduit, qui se traduit par l'absence de dépôt de chrome ou une mauvaise qualité de celui-ci dans certaines des zones de la pièce à traiter, en fonction des caractéristiques de lignes de champ.

Les artifices qui consistent, par exemple, à utiliser des anodes de forme spéciale qui vont concentrer les lignes du champ électrique dans les zones où elles sont peu présentes, ne peuvent se concevoir pour des structures de formes aussi complexes que les produits "3D" (mousses, feutres ou tissés).

Outre le faible pouvoir de pénétration, qui conduit à l'absence de dépôt de chrome dans les zones masquées vis-à-vis de l'anode ou au coeur de la structure poreuse, les conditions opératoires de l'électrolyse conduisent à des caractéristiques de dépôt non satisfaisantes : bourgeonnements sur les arêtes ou fils en surface du "3D", dépôts brûlés et friables, etc...

Les auteurs de l'invention qui fait l'objet de la présente description, ont donc développé des bains de chrome qui permettent de supprimer l'ensemble de ces défauts et d'obtenir des dépôts de chrome épais et uniformes sur des surfaces complexes, telles que les mousses, feutres ou tissés "3D", c'est à dire à travers toute l'épaisseur de ces structures, sur la totalité de leur surface développée (par recouvrement complet des mailles de mousses, des fils ou fibres de feutres et tissés), sans fermeture de leur porosité.

Les bains les plus couramment utilisés dans l'industrie sont à base d'acide chromique et d'acide sulfurique. Afin d'augmenter le pouvoir couvrant du bain, ce qui revient à réduire la densité de courant à laquelle le dépôt commence à se former, il est conseillé par les hommes de l'art de respecter un rapport donné entre la concentration du bain en acide chromique et celle en acide sulfurique. Ainsi, pour une concentration en acide chromique de 300 g/l, le rapport acide chromique / acide sulfurique devra être de 140.

Pour le traitement des structures de type mousse, cette précaution demeure insuffisante si l'on entend réaliser un dépôt de chrome homogène, recouvrant chaque brin.

Il est également préconisé d'utiliser des bains contenant des acides fluorés, tels que l'acide fluosilicique, l'acide fluorhydrique, l'acide fluoborique. Ainsi réalise-t-on, pour accroître leur pouvoir couvrant, des bains dont la composition est du type suivant :

| | |
|---|---|
| acide chromique | 250 g/l |
| acide sulfurique | 0,6 % |
| acide fluosilicique H₂S F₆ | 1 % |

Cependant, et notamment avec une mousse dite "45 PPI" (mesure d'environ 45 pores par inch linéaire en surface), d'épaisseur 5 mm, un tel principe de composition ne permet pas de déposer de chrome au coeur de la structure "3D".

Les auteurs ont par contre montré que l'emploi de bichromate de potassium et/ou de sodium permettait d'améliorer suffisamment le pouvoir de pénétration et le pouvoir couvrant, pour déposer le chrome au coeur des mousses épaisses ou des feutres, en particulier pour des rapports bichromate / acide chromique compris entre 0,25 et 1,50 en poids, et notamment entre 0,80 et 1,20.

Cette évolution des bains de chromage rend donc possible la métallisation des structures "3D" dans les conditions recherchées, soit à travers toute l'épaisseur de ces structures, sur la totalité de leur surface développée (par recouvrement complet des mailles de mousses, des fils ou fibres de feutres et tissés), sans fermeture de leur porosité.

Un autre des composants essentiels des alliages réfractaires est l'aluminium. A haute température, l'aluminium forme en effet une couche d'oxyde protectrice de l'alliage.

L'aluminium peut être introduit, au cours du processus opératoire, de différentes manières :
- par trempé dans une barbotine contenant les particules d'aluminium en suspension,
- par pulvérisation d'une suspension de particules d'aluminium,
- par "peinture" au moyen d'une laque ou peinture contenant des particules d'aluminium.

Un traitement thermique de diffusion des constituants du futur alliage peut être conduit, en une seule fois après mise en place de la totalité des constituants, ou en plusieurs séquences, y compris la possibilité de le conduire après chaque apport d'une couche de constituant.

Il est possible de disposer de particules d'aluminium très fines (< 10 microns). La diffusion de aluminium à travers les couches métalliques s'effectue ainsi aisément.

A titre d'exemple illustratif mais non limitatif de la présente invention, on fournit ci-après le processus opérationnel de préparation d'une mousse d'alliage Ni-Cr-Al.

### Exemple :

Une mousse de "45 PPI", dont le diamètre moyen des pores est de 0,3 mm, est découpée en feuilles de 5 mm d'épaisseur. On procède à l'activation d'une feuille de 1 dm² selon la technique décrite dans le brevet français n° 95 09547 pour rendre la mousse électriquement conductrice. On réalise un premier dépôt de nickel à l'aide d'un bain de sulfamate de nickel à raison de 800 g/m² de surface apparente de la mousse.

On procède ensuite à un dépôt de chrome à l'aide d'un bain dont la composition est la suivante :
- acide chromique : 300 g/l
- bichromate de sodium : 80 g/l
- sulfate de sodium : 3 g/l

Dans cet exemple, l'apport en ions sulfates est opéré par introduction de sulfate de sodium.

On opère sous une densité de courant de 40 Aldm², à des températures comprises entre environ 15 et 25° C.

Les anodes sont constituées de plomb avec une surface active deux fois supérieure à la surface apparente de la mousse de nickel.

On dépose une quantité de chrome correspondant à 200 g/m², soit une épaisseur d'environ 2,5 microns.

On peint ensuite la mousse ainsi obtenue par pulvérisation, à l'aide d'une suspension de particules d'aluminium.

L'ensemble est enfin traité dans un four à atmosphère inerte durant quatre heures. On y opère dans un premier temps un palier à une température d'environ 500° C, inférieure au point de fusion de l'aluminium, pour permettre la diffusion de l'aluminium dans les couches métalliques, puis on porte la température à environ 1000°C, afin de réaliser la diffusion de l'ensemble des autres constituants de l'alliage.

La microanalyse RX, pratiquée sur les coupes du revêtement métallique formant alors les brins constitutifs de la structure, montre que du coeur vers la surface de celui-ci, l'évolution de la composition de l'alliage est la suivante :
- nickel : 80 à 75 %
- chrome:14 à 17 %
- aluminium : 6 à 9 %

On peut constater que la technique de dépôt du chrome utilisée, et l'ajout de l'aluminium, conduisent à des revêtements que l'on pourra qualifier d'homogènes, et qui répondent de manière satisfaisante au problème posé.

Si l'on procède selon le mode opératoire de l'exemple indiqué ci-dessus, avec une mousse de 90 PPI, la répartition observée des composants de l'alliage est identique.

## Revendications

1. Procédé de fabrication de structures métalliques "tridimensionnelles" à haute porosité, de types alvéolaire réticulé, en alliages réfractaires contenant du chrome apporté par dépôt électrolytique, la structure tridimensionnelle étant une mousse non frittée, un feutre ou un tissé, **caractérisé en ce que** le dépôt électrolytique est effectué dans un bain contenant du bichromate de potassium et/ou de sodium, ce bain contenant entre 25 % et 150 % de bichromate de potassium ou de sodium en poids par rapport à l'acide chromique.

2. Procédé de fabrication de structures métalliques selon la revendication 1, **caractérisé en ce que** les alliages réfractaires sont ternaires ou quaternaires, de types nickel-chrome-aluminium, fer-chrome-aluminium ou nickel-fer-chrome-aluminium.

3. Procédé de fabrication de structures métalliques selon l'une des revendications 1 et 2, **caractérisé en ce que** l'apport en aluminium est réalisé par trempé dans une barbotine contenant des particules d'aluminium en suspension.

4. Procédé de fabrication de structures métalliques selon l'une des revendications 1 et 2, **caractérisé en ce que** l'apport en aluminium est réalisé par pulvérisation d'une suspension de particules d'aluminium.

5. Procédé de fabrication de structures métalliques selon l'une des revendications 1 et 2, **caractérisé en ce que** l'apport en aluminium est réalisé par peinture de la structure au moyen d'une laque ou peinture contenant des particules d'aluminium.

6. Procédé de fabrication de structures métalliques selon l'une des revendications 1 et 2, **caractérisé en ce que** le fer et/ou le nickel sont apportés par dépôt(s) électrolytique(s).

7. Procédé de fabrication de structures métalliques selon la revendication 1, **caractérisé en ce que** les alliages réfractaires sont réalisés par traitement thermique de diffusion de ses divers constituants.

8. Structures métalliques "tridimensionnelles" à haute porosité en alliages réfractaires, de types alvéolaire réticulé, ces alliages réfractaires contenant du chrome apporté par dépôt électrolytique, la structure tridimensionnelle étant une mousse non frittée, un feutre ou un tissé, **caractérisé en ce que** cette structure est obtenue par le procédé selon la revendication 1, les alliages étant obtenus par traitement thermique de diffusion de leurs divers constituants.

9. Structures métalliques selon la revendication 8, **caractérisées en ce que** les alliages réfractaires sont ternaires ou quaternaires, de types nickel-chrome-aluminium, fer-chrome-aluminium ou nickel-fer-chrome-aluminium, l'aluminium étant apporté sous forme de particules dans une barbotine, dans une laque ou peinture, ou en suspension pulvérisée.

## Patentansprüche

1. Herstellungsverfahren für hochporöse "dreidimensionale" metallische Strukturen mit vemetzter Zellenstruktur aus feuerfesten Legierungen, die durch elektrolytische Abscheidung eingebrachtes Chrom enthalten, wobei die dreidimensionale Struktur ein ungesinterter Schaum, ein Filz oder ein Gewebe ist, **dadurch gekennzeichnet, dass** die elektrolytische Abscheidung aus einem Kalium- und/oder Natriumbichromat enthaltenden Bad erfolgt, wobei dieses Bad, bezogen auf die Chromsäure, zwischen 25 und 150 Gewichtsprozent an Kalium- oder Natriumbichromat enthält.

2. Herstellungsverfahren für metallische Strukturen nach Anspruch 1, **dadurch gekennzeichnet, dass** die feuerfesten Legierungen ternäre oder quaternäre Legierungen vom Nickel-Chrom-Aluminium-, Eisen-Chrom-Aluminium- oder Nickel-Eisen-Chrom-Aluminium-Typ sind.

3. Herstellungsverfahren für metallische Strukturen nach einem der Ansprüche 1 und 2, **dadurch gekennzeichnet, dass** der Aluminiumeintrag durch Eintauchen in einen Schlicker erfolgt, der aufgeschlämmte Aluminiumteilchen enthält.

4. Herstellungsverfahren für metallische Strukturen nach einem der Ansprüche 1 und 2, **dadurch gekennzeichnet, dass** der Aluminiumeintrag durch Versprühen einer Aufschlämmung von Aluminiumteilchen erfolgt.

5. Herstellungsverfahren für metallische Strukturen nach einem der Ansprüche 1 und 2, **dadurch gekennzeichnet, dass** der Aluminiumeintrag durch Streichen der Struktur mit einem Lack oder einer Farbe erfolgt, die Aluminiumteilchen enthalten.

6. Herstellungsverfahren für metallische Strukturen nach einem der Ansprüche 1 und 2, **dadurch gekennzeichnet, dass** das Eisen und/oder das Nickel durch elektrolytische Abscheidung(en) eingebracht werden.

7. Herstellungsverfahren für metallische Strukturen nach Anspruch 1, **dadurch gekennzeichnet, dass** die feuerfesten Legierungen durch Diffusion ihrer verschiedenen Bestandteile bei Wärmebehandlung realisiert werden.

8. Hochporöse "dreidimensionale" metallische Strukturen mit vernetzter Zellenstruktur aus feuerfesten Legierungen, wobei diese feuerfesten Legierungen durch elektrolytische Abscheidung eingebrachtes Chrom enthalten und die dreidimensionale Struktur ein ungesinterter Schaum, ein Filz oder ein Gewebe ist, **dadurch gekennzeichnet, dass** diese Struktur durch das Verfahren nach Anspruch 1 gewonnen wird, wobei die Legierungen durch Diffusion ihrer verschiedenen Bestandteile bei Wärmebehandlung gewonnen werden.

9. Metallische Strukturen nach Anspruch 8, **dadurch gekennzeichnet, dass** die feuerfesten Legierungen ternäre oder quaternäre Legierungen vom Nickel-Chrom-Aluminium-, Eisen-Chrom-Aluminium- oder Nickel-Eisen-Chrom-Aluminium-Typ sind und das Aluminium in Gestalt von Teilchen aus einem Schlicker, einem Lack oder einer Farbe oder einer versprühten Aufschlämmung eingebracht wird.

## Claims

1. Production process for "three-dimensional" metallic structures with high porosity, of reticular honeycomb types, in refractory alloys containing chromium provided by electrolytic deposition, the three-dimensional structure being a non-sintered sponge, a felt or a woven item, **characterized in that** the electrolytic deposition is performed in a bath containing potassium and/or sodium dichromate, this bath containing between 25% and 150% of potassium or sodium dichromate by weight relative to the chromic acid.

2. Production process for metallic structures according to claim 1, **characterized in that** said refractory alloys are ternary or quaternary, of nickel-chromium-aluminium, iron-chromium-aluminium or nickel-iron-chromium-aluminium types.

3. Production process for metallic structures according to any of claims 1 and 2, **characterized in that** the provision of aluminium is carried out by immersing in a slip containing aluminium particles in suspension.

4. Production process for metallic structures according to any of claims 1 and 2, **characterized in that** the provision of aluminium is carried out by spraying a suspension of aluminium particles.

5. Production process for metallic structures according to any of claims 1 and 2, **characterized in that** the provision of aluminium is carried out by painting the structure using a lacquer or paint containing aluminium particles.

6. Production process for metallic structures according to any of claims 1 and 2, **characterized in that** the iron and/or nickel are provided by electrolytic deposition(s).

7. Production process for metallic structures according to claim 1, **characterized in that** the alloys are produced by thermal diffusion treatment of its various constituents.

8. "Three-dimensional" metallic structures with high porosity, of reticular honeycomb types, in refractory alloys containing chromium provided by electrolytic deposition, the three-dimensional structure being a non-sintered sponge, a felt or a woven.item, **characterized in that** these structures are obtained by the process of claim 1, the alloys being obtained by thermal diffusion treatment of their various constituents.

9. Metallic structures according to claim 8, **characterized in that** the refractory alloys are ternary or quaternary, of nickel-chromium-aluminium, iron-chromium-aluminium or nickel-iron-chromium-aluminium types, the aluminium being provided in the form of particles in a slip, in a lacquer or paint, or in a sprayable suspension.
